# EUROPEAN PATENT APPLICATION

(11) **EP 1 195 702 A2**
(43) Date of publication of application: **10.04.2002**
(21) Application number: 01123679.1
(22) Date of filing: 02.10.2001
(51) Int. Cl.: G06F 17/60

(54) **A digital contents data generating system**

(30) Priority: 02.10.2000 JP 2000302737; 13.10.2000 JP 2000313670
(71) Applicant: Hudson Soft Co., Ltd., Sapporo-shi, Hokkaido (JP)
(72) Inventor: Murakami, Satoshi, Sapporo-shi, Hokkaido (JP); Kaneko, Kiyoshi, Room 206 Verde Minami-Nagasaki, Tokyo (JP); Wada, Mitsumasa, Yokohama-shi, Kanagawa-ken (JP); Nakajima, Toshihiko, Room C-212 Life-Hills, Iruma-shi, Saitama-ken (JP); Utoh, Toshiya, Room 202 House Maruyama-koen, 2-15, Sapporo-chi, Hokkaido (JP); Kinoshita, Toshiya, Room 102 Pure-palace, Sapporo-shi, Hokkaido (JP); Hamaguchi, Kiminobu, 3-46-5, Kamakura, Katsushika-ku, Tokyo (JP)
(74) Representative: Goddar, Heinz J., Dr.

(57) **Abstract**

A system for preventing unauthorized use of digital contents information which disables the use of a storage medium having digital contents recorded thereon by those other than an authorized user. An information terminal 10 reads out digital contents information desired by a user from a contents storing server 6 for storing digital contents information, encodes the read out digital contents information based on ID information of a player 15, and writes it on a predetermined storage medium. The player 15 reads out the data from the storage medium and performs a decode process on the data based on its own ID information to restore the digital contents information.

## Description

### Background of the Invention

### Field of the Invention

This invention relates to a digital contents data generating system and, more particularly, to a digital contents data generating system which restricts use of digital contents information duplicated for a specific user by those other than the specific (authorized) user.

### Description of the Prior Art

In recent years, there are increasing opportunities to take on-line steps for purchasing products by the progress of computer technologies and spread of the Internet. Further, video and music data, which have traditionally been analog information, are now being distributed in the form of digital data storage media such as CDs. It is expected in the future that the manner in which such digital data (contents) including video and music data and computer programs (packaged software products) are purchased on networks such as the Internet and downloaded to digital storage devices on the spot, will become common.

While such digital contents are provided to a user in the form of a storage medium such as a CD in general, what is sold to the user is not a product itself, but a right to use the product. Therefore, even an authorized user (purchaser) is not granted a right to lend or resell the product to others without authorization. However, in reality, such unauthorized lending or resale of the storage medium having those digital contents stored to those other than the authorized users would be common practice, thereby raising a problem that companies engaged in the development of such products, copyright holders, and so on would suffer serious disbenefits.

### Summary of the Invention

Therefore, it is an object of the present invention to provide a digital contents data generating system which disables a use of a storage medium having digital contents recorded therein by those other than an authorized user and prevent the storage medium having digital contents recorded therein from being lent, resold or copied without authorization.

According to one aspect of the present invention, an apparatus for generating digital contents information for distribution, wherein predetermined digital contents information is read out from digital contents information storing means, encoded based on predetermined ID information, and written on a predetermined storage medium,

According to another aspect of the present invention, an apparatus for generating digital contents information for distribution which acquires the digital contents information via an information communication network comprises : a contents storing server for storing the digital contents information; and an information terminal for reading out digital contents information desired by a user from the contents storing server, encoding the readout digital contents information based on predetermined ID information, and writing the encoded digital contents information on a predetermined storage medium.

According to a further aspect of the present invention, an apparatus for generating digital contents information for distribution which acquires the digital contents information via an information communication network comprises: a contents storing server for storing the digital contents information; and an information terminal; wherein the information terminal comprises: a selecting unit for selecting digital contents information desired by a user from the contents storing server; a readout unit for reading out the digital contents information selected by the selecting unit from the contents storing server; an encoder for encoding the digital contents information read out from the readout unit based on predetermined ID information; and a storage medium for recording the digital contents information encoded by the encoder.

According to a still further aspect of the present invention, an apparatus for restoring digital contents information that was read out from digital contents information storing means, encoded based on predetermined ID information, and written on a predetermined storage medium for distribution, wherein the restoring apparatus reads out data from the predetermined storage medium, and decodes the data based on the predetermined ID information corresponding to ID information of the restoring apparatus itself.

According to a still further aspect of the present invention, an apparatus for restoring digital contents information that was read out from digital contents information storing means, encoded based on predetermined ID information, and written on a predetermined storage medium for distribution, wherein the restoring apparatus reads out data from the predetermined storage medium, and decodes the data based on decoding ID information comprising a registration number issued to respective user who uses the storage medium supplied by a predetermined manner or a number or personal identification data issued for respective contents storage medium.

According to a further aspect of the present invention, a digital contents data generating/restoring system comprises: a first apparatus for generating digital contents information for distribution; and a second apparatus for restoring the digital contents information; wherein the first apparatus reads out predetermined digital contents information from digital contents information storing means, encodes the predetermined digital contents information based on predetermined ID information, and writes the encoded digital contents information on a predetermined storage medium; and wherein the second apparatus reads out data from the predetermined storage medium, and decodes the data based on the predetermined ID information corresponding to ID information of the second apparatus itself.

According to a further aspect of the present invention, a digital contents data generating/restoring system comprises: a first apparatus for generating digital contents information for distribution; and a second apparatus for restoring the digital contents information; wherein the first apparatus read out predetermined digital contents information from digital contents information storing means, encodes the predetermined digital contents information based on predetermined ID information, and write the encoded digital contents information on a predetermined storage medium; and wherein the second apparatus reads out data from the predetermined storage medium, and decodes the data based on decoding ID information comprising a registration number issued to respective user of the storage medium supplied by a predetermined manner, or a number or personal identification data issued for respective contents storage medium.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprising a contents storing server for storing the digital contents information, and an information terminal for reading out digital contents information desired by a user from the contents storing server, encoding the read out digital contents information based on predetermined ID information, and writing the encoded digital contents information on a predetermined storage medium; and wherein the second apparatus reads out data from the predetermined storage medium, and decodes the data based on the predetermined ID information corresponding to ID information of the second apparatus itself.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprising a contents storing server for storing the digital contents information, and an information terminal for reading out digital contents information desired by a user from the contents storing server, encoding the read out digital contents information based on predetermined ID information, and writing the encoded digital contents information on a predetermined storage medium; and wherein the second apparatus reads out data from the predetermined storage medium, and decodes the data based on decoding ID information comprising a registration number issued to respective user of the storage medium supplied by a predetermined manner, or a number or personal identification data issued for respective contents storage medium.

According to a further aspect of the present invention, an apparatus for generating digital contents information for distribution which acquires the digital contents information via an information communication network comprises: a first server for storing the digital contents information; a second server for generating a predetermined storage medium on which encoded digital contents information is recorded, the second server reading out digital contents information desired by a user from the first server, encoding the read out digital contents information based on predetermined ID information, and writing the encoded digital contents information on the predetermined storage medium; and a user terminal for notifying the second server of the desired digital contents information and predetermined ID information via the information communication network.

According to a further aspect of the present invention, an apparatus for generating digital contents information for distribution which acquires the digital contents information via an information communication network comprises: a first server for storing the digital contents information; a second server for generating a storage medium on which encoded digital contents information is recorded, the second server comprising a selecting unit for selecting digital contents information desired by a user from the first server; a readout unit for reading out the digital contents information selected by the selecting unit from the first server; an encoder for encoding the digital contents information read out by the readout unit based on the ID information; and a storage medium for recording the digital contents information encoded by the encoder; and a user terminal for notifying the second server of the desired digital contents information and predetermined ID information via the information communication network.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprises a first server for storing the digital contents information; a second server for generating a predetermined storage medium on which encoded digital contents information is recorded, the second server reading out digital contents information desired by a user from the first server, encoding the read out digital contents information based on predetermined ID information, and writing the encoded digital contents information on the predetermined storage medium; and a user terminal for notifying the second server of the desired digital contents information and predetermined ID information via the information communication network; and wherein the second apparatus reads out data from the predetermined storage medium, and decodes the data based on the predetermined ID information corresponding to ID information of the second apparatus itself.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprises a first server for storing the digital contents information; a second server for generating a predetermined storage medium on which encoded digital contents information is recorded, the second server reading out digital contents information desired by a user from the first server, encoding the read out digital contents information based on predetermined ID information, and writing the encoded digital contents information on the predetermined storage medium; and a user terminal for notifying the second server of the desired digital contents information and predetermined ID information via the information communication network; and wherein the second apparatus reads out data from the predetermined storage medium, and decodes the data based on decoding ID information comprising a registration number issued to respective user of the storage medium supplied by a predetermined manner, or a number or personal identification data issued for respective contents storage medium.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprises a first server for storing the digital contents information; a second server for generating a storage medium on which encoded digital contents information is recorded, the second server comprising a selecting unit for selecting digital contents information desired by a user from the first server, a readout unit for reading out the digital contents information selected by the selecting unit from the first server, an encoder for encoding the digital contents information read out by the readout unit based on the ID information, and a storage medium for recording the digital contents information encoded by the encoder; and a user terminal for notifying the second server of the desired digital contents information and predetermined ID information via the information communication network; and wherein the second apparatus reads out data from the predetermined storage medium, and decodes the data based on the predetermined ID information corresponding to ID information of the second apparatus itself.

According to a further aspect of the present invention, a digital contents data generating/restoring system comprises: a first apparatus for generating digital contents information for distribution which acquires the digital contents information via an information communication network; and a second apparatus for restoring the digital contents information; wherein the first apparatus comprises a first server for storing the digital contents information; a second server for generating a storage medium on which encoded digital contents information is recorded, the second server comprising a selecting unit for selecting digital contents information desired by a user from the first server, a readout unit for reading out the digital contents information selected by the selecting unit from the first server, an encoder for encoding the digital contents information read out by the readout unit based on the ID information, and a storage medium for recording the digital contents information encoded by the encoder; and a user terminal for notifying the second server of the desired digital contents information and predetermined ID information via the information communication network; and wherein the second apparatus reads out data from the predetermined storage medium, and decodes the data based on decoding ID information comprising a registration number issued to respective user of the storage medium supplied by a predetermined manner, or a number or personal identification data issued for respective contents storage medium.

According to a further aspect of the present invention, a storage medium on which processed digital contents information is recorded, wherein the processed digital contents information is generated by a process comprises the steps of: reading out predetermined digital contents information from digital contents information storing means; encoding the readout digital contents information based on predetermined ID information; and writing the encoded digital contents information on the predetermined storage medium.

According to the present invention mentioned above, digital contents information for distribution is generated in such a manner that predetermined digital contents information, is read out from the digital contents information storing means, encoded based on predetermined ID information, and then written on a predetermined storage medium. On the occasion of such generation, identification information specific to a particular apparatus that uses the storage medium, a registration number issued to respective user (purchaser or the like), or a number issued for respective contents storage medium may preferably be used as the ID information on one hand. The particular apparatus reads out data from the storage medium and decodes the data based on the ID information, preferably the ID information of the apparatus itself, to restore the predetermined digital contents information. It is therefore possible to prevent an unauthorized use of restored digital contents information by those other than the authorized user, that is the owner, or the user of the particular apparatus.

### Brief Description of the Drawings

The present invention will be explained in more detail in conjunction with appended drawings, wherein:
Fig. 1 is a block diagram showing a configuration of an apparatus for generating digital contents information for distribution in a digital contents data generating system according to a first preferred embodiment of the present invention;
Fig. 2 is a flow chart illustrating steps of an encode process performed by an encoder;
Fig. 3 is a block diagram showing a configuration of a digital contents information restoring apparatus;
Fig. 4 is a flow chart illustrating steps of a decode process performed by a decoder; and
Fig. 5 is a block diagram showing a configuration of an apparatus for generating digital contents information for distribution in a digital contents data generating system according to a second preferred embodiment of the present invention.

### Detailed Description of the Preferred Embodiments

Referring to drawings, preferred embodiments of the present invention will be described below.

### [First Preferred Embodiment]

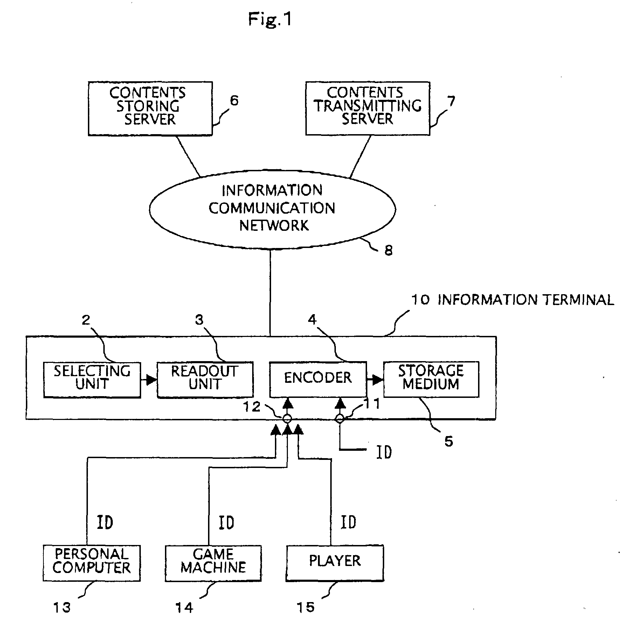

Fig. 1 is a block diagram showing a configuration of an apparatus for generating digital contents information for distribution in a digital contents data generating system according to a first preferred embodiment of the present invention. In this embodiment, an example will be described in which movie software (digital contents information) desired by a user is acquired (or purchased) by an information terminal installed in a store or the like. In such a case, movie software such as a movie is acquired (or purchased) by the information terminal installed in the store or the like.

Referring to Fig. 1, a contents storing server 6 and a contents transmitting server 7 are connected to an information communication network 8. Further, one or more information terminals 10 are connected to the information communication network 8. The information terminal 10 is provided with a selecting unit 2 for selecting a digital content desired by a user from the contents storing server 6, a readout unit 3 for reading out digital contents data from the contents storing server 6 based on the result provided by the selecting unit 2, an encoder 4 for encoding the read out digital contents data based on predetermined ID information and outputting the encoded data, and a storage medium 5 for recording the data output by the encoder 4.

Further, the encoder 4 performs a predetermined encode process based on ID information supplied by a user from input means such as a keyboard (not shown) through an input terminal 11, or ID information which is identification information specific to an apparatus that uses the storage medium 5, that is a digital contents information restoring apparatus such as a personal computer 13, a game machine 14 or a player 15 for CD, or the like. In the latter case, the ID information is directly (i.e., with the user being unconscious of the ID information) supplied on line from any one of the above apparatuses through an input terminal 12.

The information terminal 10 which may be installed in various places such as a convenience store, a record shop, a shopping center, a railway station, and a service area or a parking area on an expressway, is provided with a display capable of displaying items to be sold to allow a user to input, select, and search desired digital contents information by means of a touch panel, mouse, track ball, joystick, keyboard or the like. A user who is going to acquire digital contents information operates the information terminal 10 to search and select desired movie software.

By the operations of the selecting unit 2 and readout unit 3, selected digital contents information is supplied from the contents storing server 6 to the encoder 4 via the information communication network 8 and contents transmitting server 7. Further, predetermined ID information (the ID of the player 15 in this case) is supplied to the encoder 4 wherein an encode process (a process of generating a specific file format, as is similar to that in the following description) is performed on the digital contents information. At this time, the movie software (digital contents information) and the player 15 may be supplied (or sold) in combination (as a set).

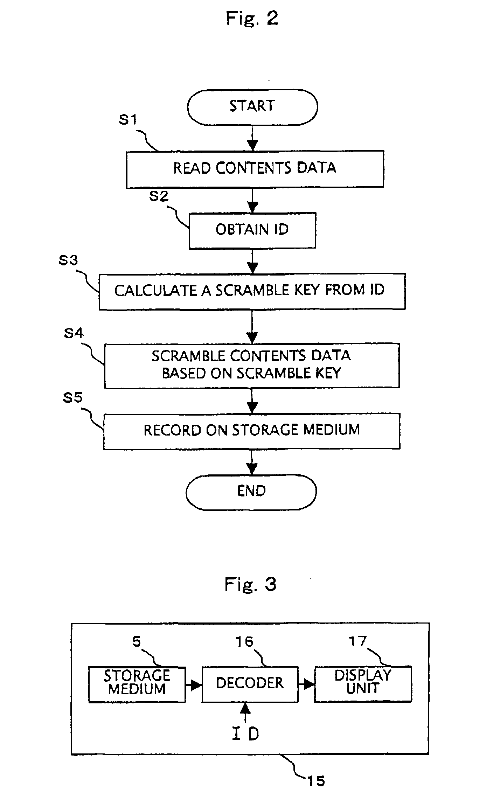

Fig. 2 is a flow chart illustrating steps of the encode process performed by the encoder 4. With reference to Fig. 2, a description will be made of the encode process performed by the encoder 4 as an example.

When digital contents information (hereinafter also referred to as "contents data") is supplied, the encoder 4 reads the contents data (step S1) and obtains the ID (the ID of the player 15 supplied by the player) (step S2). Based on the supplied ID, the encoder 4 then generates uniform random numbers (scramble key), for example, by using the supplied ID as a seed, required depending on the capacity (the data capacity of the digital contents information) to be rearranged (scrambled) (step S3), and rearranges (scrambles) the contents data in the order of the random numbers (based on the scramble key) (step S4). Different seeds generate completely different random numbers.

The contents data thus rearranged are recorded (directly stamped) on a storage medium such as a CD-R (step S5) and provided to the user on the spot. Further, a manual or the like may be printed and provided to the user as the need arises.

In this case, the storage medium such as a CD-R generated and provided to the user as described above is run by the player 15, which is an example of a digital contents information restoring apparatus according to the present invention as shown in Fig. 3. Fig. 3 is a block diagram showing a configuration of the digital contents information restoring apparatus (player 15) in a digital contents data generating system according to the present invention.

As shown in Fig. 3, the player 15 is provided with the storage medium 5 generated by the information terminal 10, a decoder 16 for descrambling the scrambled contents data recorded on the storage medium 5, and a display unit 17 for outputting the descrambled contents data (movie software, in this case).

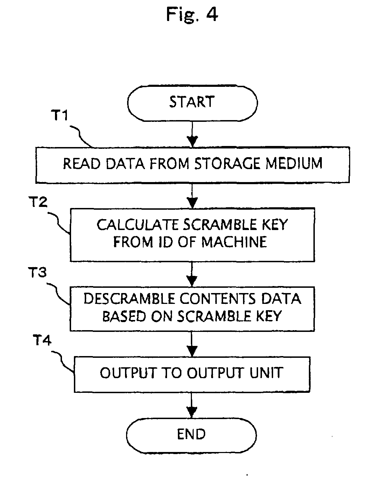

Next, an operation of the player 15 shown in Fig. 3 will now be described with reference to Fig. 4. Fig. 4 is a flow chart illustrating steps of the decode process performed by the decoder 16.

When the storage medium 5 generated by the information terminal 10 is loaded, the player 15 starts reading the scrambled contents data with the decoder 16 (step T1). Further, the decoder 16 calculates a scramble key from the ID of the player 15, e.g., the production number of the same or the serial number of a particular component of the same (the ID of the player 15 used for encoding).

Further, the decoder 16 descrambles the scrambled contents data based on the calculated scramble key (step T3). Then, it supplies the descrambled contents data to the display unit 17 (step T4). It is thus possible to watch the movie software recorded on the CD-R with the display unit 17. The movie software can be watched using only the player 15 having the ID used for encoding. Since the ID is specific to each apparatus as described above and is a value that is unique in the world (e.g., a value which can be converted into an alphanumerical code or the like), it goes without saying that the movie software can not be watched on a player owned by a different user even if the players are the same products (as is similar to that in the following description).

As previously described, the player 15 may be supplied (sold) to the user along with the movie software (digital contents information) recorded on the CD-R or the like.

### [Second Preferred Embodiment]

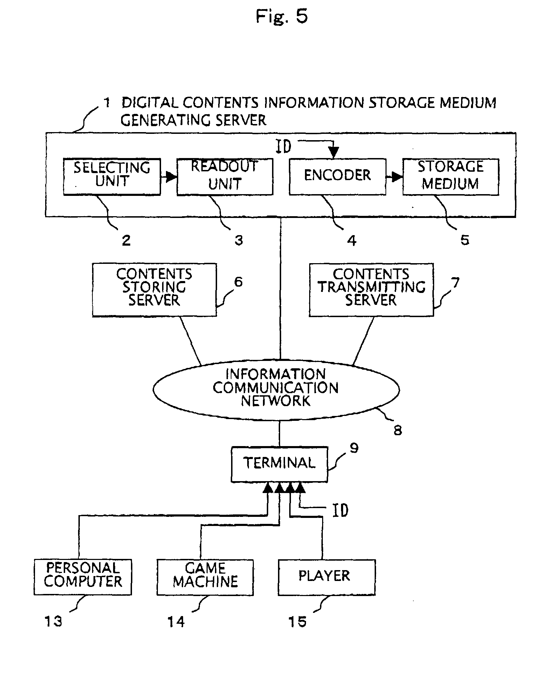

Fig. 5 is a block diagram showing a configuration of an apparatus for generating digital contents information for distribution in a digital contents data generating system according to a second preferred embodiment of the present invention. In this embodiment, an example will be described in which movie software (digital contents information) desired by a user is acquired (purchased) with a terminal 9 such as a portable terminal, a personal computer installed in the user's house, or the like. In such a case, for example, the purchased software (CD-R, or the like) such as a movie software is acquired at the user's house on a cash-on-delivery basis or at a convenience store or the like to which the purchased software is delivered.

Referring to Fig. 5, a contents storing server 6, a contents transmitting server 7, and a digital contents information storage medium generating server 1 are connected to an information communication network 8. Further, one or more terminals 9 are connected to the information communication network 8. The digital contents information storagemedium generating server 1 is provided with a selecting unit 2 for selecting a digital content desired by a user from the contents storing server 6, a readout unit 3 for reading out digital contents data from the contents storing server 6 based on the result provided by the selecting unit 2, an encoder 4 for performing an encode process (a process of generating a specific file format, as is similar to that in the following description) on the read out digital contents data based on predetermined ID information and outputting the encoded data, and a storage medium 5 for recording the data output by the encoder 4.

Further, the terminal 9 is supplied with ID information from a user, or supplied with ID information which is identification information specific to an apparatus that uses the storage medium 5, that is a digital contents information restoring apparatus such as a personal computer 13, a game machine 14 or a player 15 for CD, or the like, directly from the apparatus (i.e., with the user being unconscious of the ID information).

A user who is going to acquire (purchase) digital contents information such as movie software operates the terminal 9 to search and select desired movie software or the like (digital contents information which is hereinafter also referred to as "contents data").

The selected (on ordered) digital contents information is supplied from the terminal 9 to the digital contents information storage medium generating server 1 via the information communication network 8 and the contents transmitting server 7 along with predetermined ID information (the ID of the player 15, in this case). It is then read out by the selecting unit 2 and the readout unit 3 of the digital contents information storage medium generating server 1 from the contents storing server 6, and is supplied to the encoder 4 via the information communication network 8. whereat, the encoder 4 performs an encode process on the digital contents information. At this time, the movie software (digital contents information) and the player 15 may be supplied (or sold) in combination (as a set).

The encode process performed by the encoder 4 will not be described here because it is the same as described in the first preferred embodiment. Contents data scrambled, i.e. rearranged by the encoder 4 is recorded on the storage medium 5 such as a CD-R.

The storage medium 5 such as a CD-R having contents data recorded thereon is provided by a digital contents information provider or the like, who is the administrator of the digital contents information storage medium generating server 1, to the user (or orderer) by delivering it directly to the user's house, or a convenience store or the like designated by the user, along with an instruction manual when necessary.

In this case, the storage medium 5 such as a CD-R provided to the user as described above is run by the player 15 as shown in Fig. 3. Specifically, when the storage medium 5 generated by the information terminal 10 is loaded, the player 15 starts reading the scrambled contents data with the decoder 16. Further, the decoder 16 calculates a scramble key from the ID of the player 15, e.g., the production number of the same or the serial number of a particular component of the same (the ID of the player 15 used for encoding).

Then, it descrambles the scrambled contents data based on the calculated scramble key and supplies the descrambled contents data to the display unit 17. It is thus possible to watch the movie software recorded on the CD-R with the display unit 17. The movie software can be watched using only the player 15 having the ID used for encoding. As previously described, the player 15 may be supplied (sold) to the user along with the movie software (digital contents information) recorded on the CD-R or the like.

In this embodiment, an example has been described in which an order for digital contents information such as movie software is placed from a terminal 9 such as a portable terminal, a personal computer installed in a user's house or the like to a digital contents information provider or the like via the information communication network 8. The present invention is not limited to this example but may include such an example that an order may be placed to a shop, agent or the like managed by a digital contents information provider or the like by directly notifying it of the ID information of the player 15.

In the above embodiments, the ID information was described with reference to identification information (production number or the like) specific to an apparatus (an apparatus for generating digital contents information for distribution or a digital contents information restoring apparatus) by way of example. The present invention is not limited to this example but may include such an example that registration number or the like issued to respective user (purchaser or the like), a number or the like issued for respective contents storage medium, or personal identification data on (the human body of) respective person taken from his/her fingerprints, voice, iris or the like, may be used as the ID information. In this case, for example, the ID information (number) is input to the information terminal 10 shown in Fig. 1, the decoder 16 shown in Fig. 3, and or the terminal 9 shown in Fig. 5 from ID information input means (keyboard or the like) which is not shown.

Moreover, scrambled digital contents information may be downloaded from the encoder 4 of the digital contents information storage medium generating server 1 to the digital contents information restoring apparatus via the terminal 9. Alternatively, the personal computer 13 may be provided with the function of the terminal 9 to download scrambled digital contents information to the same directly from the encoder 4.

While data rearrangement (scrambling) has been described as a process at the encoder by way of example, the present invention is not limited to this example, but any process may be employed as long as it generates a unique file format that is different from the original file format. Further, the encode process may be performed entirely or partially on the provided digital contents data, while the same may be applied to the case of decode process.

According to the above embodiments, since digital contents reside in a contents storing server on a network to achieve a so-called single inventory, there is no need for maintaining inventory at each shop. This makes it possible to save spatial resources, to save transportation costs, and to access latest information from all information terminals only by updating information in the contents storing server even when contents thereof are to be updated. In addition, there is no restriction on the field of digital contents that can be accessed (provided), and digital data contents covering all fields can be accessed as long as they can be stored in the contents storing server.

Furthermore, any information on the contents storing server can be sold 24 hours by simply installing information terminals, and all of an enormous amount of digital contents stored in the contents storing server can be sold, without any spaces other than those required to accommodate information terminals. The information terminals allow unattended sale and provide search means that is far better than selecting products in shops because the terminals basically allow computer-managed sale. Further, for example, there is flexibility to allow a user to watch and listen to the high point and characteristic part of video and music information before purchasing the same.

While reference has been made to a CD-R as an example of a storage medium in the above-described embodiments, various media including MDs (Mini-Discs), CD-ROMs, and digital information media utilizing semiconductor memories may be used depending on the contents of the digital contents to be provided.

various form of information communication networks may be utilized including public telephone lines, private lines, the Internet, and satellites.

Digital contents information includes video information, music information, computer programs, game software, photographic information (bromide pictures and the like).

While digital contents information was described as being supplied to a storage medium via an information communication network, the present invention is not limited to this example but include such a configuration in that the information is directly supplied (off-line) without the intervention of any network.

As described above, according to a digital contents data generating system of the present invention, the use of a storage medium having digital contents recorded thereon is disabled in an apparatus owned or used by those other than an authorized user. Accordingly, it is possible to prevent unauthorized lending, resale and copy of the storage medium having digital contents recorded thereon.

The preferred embodiments of the present invention have been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. An apparatus for generating digital contents information for distribution, wherein predetermined digital contents information is read out from digital contents information storing means, encoded based on predetermined ID information, and writte n on a predetermined storage medium.

2. An apparatus for generating digital contents information for distribution which acquires the digital contents information via an information communication network comprising:
a contents storing server for storing sa id digital contents information; and
an information terminal for reading out digital contents information desired by a user from said contents storing server, encoding said readout digital contents information based on predetermined ID information, and wri ting the encoded digital contents information on a predetermined storage medium.

3. The apparatus for generating digital contents information for distribution according to claim 2, wherein said ID information is identification information specific to a particular apparatus which uses said storage medium.

4. The apparatus for generating digital contents information for distribution according to claim 2, wherein said ID information is a registrant number issued to respective user of said digital contents in formation, or a number or personal identification data issued for respective contents storage medium.

5. The apparatus for generating digital contents information for distribution according to claim 2, wherein said encode process is performed entirely or partially on said digital contents information.

6. An apparatus for generating digital contents information for distribution which acquires the digital contents information via an information communication network comprising:
a contents storing server for storing said digital contents information; and
an information terminal;
wherein said information terminal comprises:
a selecting unit for selecting digital contents information desired by a user from said contents storing server;
a readout unit for reading out the digital contents information selected by said selecting unit from said contents storing server;
an encoder for encoding the digital contents information read out from said readout unit based on predetermined ID information; and
a storage medium for recording the digital contents information encoded by said encoder.

7. The apparatus for generating digital contents information for distribution according to claim 6, wherein said ID information is directly supplied from a digital contents information restoring apparatus; and wherein said ID information is identification information specific to said restoring apparatus which uses the recorded storage medium.

8. The apparatus for generating digital contents information for distribution according to cla im 6, wherein a registrant number issued to respective user of said digital contents information, or a number or personal identification data issued for respective contents storage medium is supplied to said encoder as the ID information.

9. The apparatus for generating digital contents information for distribution according to claim 6, wherein said encode process is performed entirely or partially on said digital contents information.

10. An apparatus for restoring digital contents information that was read out from digital contents information storing means, encoded based on predetermined ID information, and written on a predetermined storage medium for distribution, wherein said restoring apparatus reads out data from the predetermined storage medium, and decodes said data based on said predetermined ID information corresponding to ID information of the restoring apparatus itself.

11. An apparatus for restoring digital contents information that was read out from digital contents information storing mean s, encoded based on predetermined ID information, and written on a predetermined storage medium for distribution, wherein said restoring apparatus reads out data from said predetermined storage medium, and decodes said data based on decoding ID information comprising a registration number issued to respective user who uses said storage medium supplied by a predetermined manner or a number or personal identification data issued for respective contents storage medium.

12. A digital contents data generating/ restoring system comprising:
a first apparatus for generating digital contents information for distribution; and
a second apparatus for restoring said digital contents information;
wherein said first apparatus reads out predetermined digital contents information from digital contents information storing means, encodes said predetermined digital contents information based on predetermined ID information, and writes the encoded digital contents information on a predetermined storage medium; and
wherein said second apparatus reads out data from said predetermined storage medium, and decodes said data based on said predetermined ID information corresponding to ID information of the second apparatus itself.

13. A digital contents data generating/restoring system comprising:
a first apparatus for generating digital contents information for distribution; and
a second apparatus for restoring said digital contents information;
wherein said first apparatus read out predetermined digital contents information from digit al contents information storing means, encodes said predetermined digital contents information based on predetermined ID information, and write the encoded digital contents information on a predetermined storage medium; and
wherein said second apparatus re ads out data from said predetermined storage medium, and decodes said data based on decoding ID information comprising a registration number issued to respective user of said storage medium supplied by a predetermined manner, or a number or personal ident ification data issued for respective contents storage medium.

14. A digital contents data generating/restoring system comprising:
a first apparatus for generating digital contents information for distribution which acquires the digital contents informatio n via an information communication network; and
a second apparatus for restoring said digital contents information;
wherein said first apparatus comprising a contents storing server for storing said digital contents information, and an information terminal for reading out digital contents information desired by a user from said contents storing server, encoding said read out digital contents information based on predetermined ID information, and writing the encoded digital contents information on a predetermined storage medium; and
wherein said second apparatus reads out data from said predetermined storage medium, and decodes said data based on said predetermined ID information corresponding to ID information of the second apparatus itself.

15. A digital contents data generating/restoring system comprising:
a first apparatus for generating digital contents information for distribution which acquires the digital contents information via an information communication network; and
a second apparatus for restori ng said digital contents information;
wherein said first apparatus comprising a contents storing server for storing said digital contents information, and an information terminal for reading out digital contents information desired by a user from said cont ents storing server, encoding said read out digital contents information based on predetermined ID information, and writing the encoded digital contents information on a predetermined storage medium; and
wherein said second apparatus reads out data from sa id predetermined storage medium, and decodes said data based on decoding ID information comprising a registration number issued to respective user of said storage medium supplied by a predetermined manner, or a number or personal identification data issued for respective contents storage medium.

16. An apparatus for generating digital contents information for distribution which acquires the digital contents information via an information communication network comprising:
a first server for storing said d igital contents information;
a second server for generating a predetermined storage medium on which encoded digital contents information is recorded, said second server reading out digital contents information desired by a user from said first server, enc oding said read out digital contents information based on predetermined ID information, and writing the encoded digital contents information on said predetermined storage medium; and
a user terminal for notifying said second server of the desired digital contents information and predetermined ID information via said information communication network.

17. The apparatus for generating digital contents information for distribution according to claim 16, wherein said ID information is identification informati on specific to a particular apparatus which uses said storage medium.

18. The apparatus for generating digital contents information for distribution according to claim 16, wherein said ID information is a registrant number issued to respective user of said digital contents information, or a number or personal identification data issued for respective contents storage medium.

19. The apparatus for generating digital contents information for distribution according to claim 16, wherein said encode process is performed entirely or partially on said digital contents information.

20. The apparatus for generating digital contents information for distribution according to claim 16, wherein ID information that a restoring apparatus for restoring said digital contents information using said storage medium has is directly supplied to said user terminal from said restoring apparatus.

21. The apparatus for generating digital contents information for distribution according to claim 18, wherein said registration number issued to respective user of said storage medium, or said number or personal identification data issued for respective contents storage medium is supplied to said user terminal as ID information.

22. An apparatus for generating digital contents information for distribution which acquires the digital contents information via an information communication network comprising:
a first server for storing said digital contents information;
a second server for generating a storage medium on which encoded digital contents information is recorded, said second server comprising a selecting unit for selecting digital contents information desired by a user from said first server; a readout unit for reading out the digital contents information selected by said selecting unit from said first server; an encoder for encoding the digital contents information read out by said readout unit based on said ID information; and a storage medium for recording the digital contents information encoded by said encoder; and
a user terminal for notifying said second server of the desired digital contents information and predetermined ID information via said information communication network.

23. The apparatus for generating digital contents information for distribution according to claim 22, wherein said ID information is identification information specific to a particular apparatus which uses said storage medium.

24. The apparatus for generating digital contents information for distribution according to claim 22, wherein said ID information is a registrant number issued to respective user of said digital contents information, or a number or personal identification data issued for respective contents storage medium.

25. The apparatus for generating digital contents information for distribution according to claim 22, wherein said encode process is performed entirely or partially on said digital contents information.

26. The apparatus for generating digital contents information for distribution according to claim 22, wherein ID information that a restoring apparatus for restoring said digital contents information using said storage medium has is directly supplied to said user terminal from said restoring apparatus.

27. The apparatus for generating digital contents information for distribut ion according to claim 24, wherein said registration number issued to respective user of said storage medium, or said number or personal identification data issued for respective contents storage medium is supplied to said user terminal as ID information.

28. A digital contents data generating/restoring system comprising:
a first apparatus for generating digital contents information for distribution which acquires the digital contents information via an information communication network; and
a second apparatus for restoring said digital contents information;
wherein said first apparatus comprises a first server for storing said digital contents information; a second server for generating a predetermined storage medium on which encoded digital contents information is recorded, said second server reading out digital contents information desired by a user from said first server, encoding said read out digital contents information based on predetermined ID information, and writing the encoded digital contents information on said predetermined storage medium; and a user terminal for notifying said second server of the desired digital contents information and predetermined ID information via said information communication network; and
wherein said second apparatus reads out data from said predetermined storage medium, and decodes said data based on said predetermined ID information corresponding to ID information of the second apparatus itself.

29. A digital contents data generating/restoring system comprising:
a first apparatus for generating digital contents information for distribution which acquires the digital contents information via an information communication network; and
a second apparatus for restoring said digital contents information;
wherein said first apparatus comprises a first server for storing said digital contents information; a second server for generating a predetermined storage medium on which encoded digital contents information is recorded, said second server reading out digital contents information desired by a user from said first server, encoding said read out digital contents information based on predetermined ID information, and writing the encoded digital contents information on said predetermined storage medium; and a user terminal for notifying said second server of the desired digital contents information and predetermined ID information via said information communication network; and
wherein said second apparatus reads out data from said predetermined storage medium, and decodes said data based on decoding ID information comprising a registration number issued to respective user of said storage medium supplied by a predetermined manner, or a number or personal identification data issued for respective contents storage medium.

30. A digital contents data generating/restoring system comprising:
a first apparatus for generating digital contents information for distribution which acquires the digital contents information via an information communication network; and
a second apparatus for restoring said digital contents information;
wherein said first apparatus comprises a first server for storing said digital contents information; a second server for generating a storage medium on which encoded digital contents information is recorded said second server comprising a selecting unit for selecting digital contents information desired by a user from said first server, a readout unit for reading out the digital contents information selected by said selecting unit from said first server, an encder for encoding the digital contents information read out by said readout unit based on said ID information, and a storage medium for recording the digital contents information encoded by said encoder; anda user terminal for notifying said second server of the desired digital contents information and predetermined ID information via said information communication network; and
wherein said second apparatus reads out data from said predetermined storage medium, and decodes said data based on said predetermined ID information corresponding to ID information of the second apparatus itself.

31. A digital contents data generating/restoring system comprising:
a first apparatus for generating digital contents information for distribution which acquires the digita 1 contents information via an information communication network; and
a second apparatus for restoring said digital contents information;
wherein said first apparatus comprises a first server for storing said digital contents information; a second server for generating a storage medium onwhich encoded digital contents information is recorded said second server comprising a selecting unit for selecting digital contents information desired by a user from said first server, a readout unit for reading out thedigital contents information selected by said selecting unit from said first server, an encoder for encoding the digital contents information read out by said readout unit based on said ID information, and a storage medium for recording the digital contents information encoded by said encoder; anda user terminal for notifying said second server of the desired digital contents information and predetermined ID information via said information communication network; and
wherein said second apparatus reads out data from said predetermined storage medium, and decodes said data based on decoding ID information comprising a registration number issued to respective user of said storage medium supplied by a predetermined manner, or a number or personal identificati on data issued for respective contents storage medium.

32. A storage medium on which processed digital contents information is recorded, wherein said processed digital contents information is generated by a process comprising the steps of:
reading out predetermined digital contents information from digital contents information storing means;
encoding the readout digital contents information based on predetermined ID information; and
writing said encoded digital contents information on said predetermined st orage medium.

33. The storage medium according to claim 32, wherein said ID information is identification information specific to a particular apparatus which uses said storage medium.

34. The storage medium according to claim 32, wherein said ID information is a registrant number issued to respective user of said digital contents information, or a number or personal identification data issued for respective contents storage medium.

35. The storage medium according to claim 32, wherein said encoding step is performed entirely or partially on said digital contents information .

36. The storage medium according to claim 33 or 34, wherein said processed digital contents information is restored by decoding based on said ID information.

37. The storage medium according to claim 32, wherein said storage medium and said particular apparatus are provided together to a user.
